# EUROPEAN PATENT APPLICATION

(11) **EP 4 071 106 A1**
(43) Date of publication of application: **12.10.2022**
(21) Application number: 22166904.7
(22) Date of filing: 06.04.2022
(51) Int. Cl.: C01B 3/38, B01J 19/00, B01J 23/42, F28D 20/00, F28F 21/04

(54) **HIGH EFFICIENCY REACTOR FOR ENDOTHERMIC REACTIONS ON A CATALYST**

(30) Priority: 06.04.2021 IT 202100008534
(71) Applicant: Sites S.r.l. Societa' Impianti Termici Elettrici E Strumentali, 22070 Fenegro' (CO) (IT)
(72) Inventor: DELL'ACQUA, Vittorio, 22070 FENEGRO' (CO) (IT)
(74) Representative: Robba, Pierpaolo

(57) **Abstract**

Reactor (10) for endothermic reactions on a catalyst, said reactor comprising: a main body (11) having corresponding inlets (13, 15) for a flow of heating gas (Fc) and a flow of reaction gas (Fr), respectively; a catalyst (17) for reacting said flow of reaction gas (Fr) in order to obtain a flow of syngas (Fgs) exiting said reactor (10); heat storage means (23) made of a ceramic material and capable of absorbing and storing heat from the flow of heating gas (Fc), in order to supply calories for the endothermic reaction taking place in said reactor (10).

## Description

### Technical Field

The present invention relates to a high efficiency reactor for endothermic reactions on a catalyst. More particularly, the invention relates to a reactor for reforming or cracking a gas flow for strongly endothermic reactions on a catalyst. The present invention can find application in plants for producing hydrogen by reforming methane and water vapor.

### Prior Art

In the field of chemical reactions, reactors for carrying out chemical reactions such as, for example, endothermic reactions, are known. Endothermic reactions absorb heat from the outside as they proceed. Endothermic reactions can be reforming reactions, cracking reactions of gas streams or gas mixtures of various kinds. Typically, such reactors include a catalyst and are associated with an external energy source capable of providing the calories needed for the reaction. Therefore, the temperature factor becomes particularly relevant in the design of a reactor for endothermic reactions on a catalyst.

A main problem caused by the reaction temperature required in a reactor for endothermic reactions on a catalyst lies in the formation of unwanted pollutants which may contaminate the catalyst. Therefore, there is a need to have a reactor for endothermic reactions on a catalyst that allows temperature control at specific locations in the reactor in order to avoid the formation of unwanted pollutants that may poison the catalyst.

In addition, for high reaction temperatures, a remarkable quantity of energy supplied from the outside for starting the reaction in the reactor will be necessary, which becomes a problem from the viewpoint of energy consumption as well as from the viewpoint of environmental impact.

In particular, in the field of the production of hydrogen (H2), the production of hydrogen by means of the process of reforming a feedstock containing hydrocarbons is very widespread. One of the main sources for the production of hydrogen (H2) is natural gas LNG, whose main component is methane (CH4). Reforming reactors for carrying out the steam reforming reaction, simply referred to as reforming reaction, or steam reforming, are therefore known. Such reaction consists in reacting a hydrocarbon-based feedstock, usually containing methane (CH4), and water vapor (H2O) at a temperature of around 700-1100 °C, for producing a synthesis gas known as syngas. Syngas is a mixture mainly consisting of carbon monoxide (CO) and hydrogen (H2). The reforming reaction is a strongly endothermic reaction and therefore requires high-temperature heat for carrying out the reforming process. The calories required for this endothermic reaction are usually supplied by using one or more burners. From this reforming process, hydrogen (H2) can further be obtained starting from carbon monoxide (CO), by means of a water-gas shift (WGS) reaction.

Currently known reactors for the process of reforming a methane (CH4)-containing feedstock by means of water vapor have a series of drawbacks.

A first drawback lies in that the reforming reaction, being a strongly endothermic reaction, requires high operating temperatures. In practice, the reforming process takes place at temperatures of about 800-950°C. In order to ensure the necessary temperature for the reforming reaction, reforming reactors comprising a catalyst and a series of heat exchangers, known as shell and tube reactors, are currently used to facilitate the heat exchange between the flame of the burner and the catalyst. In these known reactors, the parameter facilitating the heat exchange is the length of the tubes, which involves increased costs and increased dimensions of the reactor. In addition, ensuring the necessary temperature for supporting the endothermic reaction when using such reforming reactors results in remarkable energy consumption and strong environmental impact.

Another drawback resulting from the high temperatures required for the endothermic reforming reaction arises when the reforming reactor is activated after having been shut down. In fact, in this case the time required to reach the necessary temperature for the reaction is particularly long. Therefore, the production of hydrogen in a plant for producing hydrogen cannot be started immediately, but will require time and therefore energy to resume operation.

A further drawback of current known reactors for the process of reforming with water vapor for producing hydrogen (H2) is the formation of carbon black or coke resulting from the process. The quantities of carbon black, or coke, resulting from the reforming process, are indeed detrimental to the life of the catalyst itself, which might be polluted. In addition, the quantities of carbon black or coke released into the environment have a strong impact from the viewpoint of global pollution.

The object of the present invention is therefore to provide a highly energy-efficient reactor for endothermic reactions on a catalyst that does not have the drawbacks of prior art.

A further object of the present invention is to provide a reactor for the reforming of a gas flow consisting of a methane-containing feedstock and water vapor that is capable of carrying out the reforming reaction while minimizing the quantities of carbon black or coke resulting from the reforming reaction.

A further object of the invention is to provide a reactor for the steam reforming reaction that can absorb and store heat from a heating gas introduced in said reactor in order to provide the necessary heat for the reforming reaction.

Not least object of the invention is to provide a reforming or cracking reaction that can be carried out industrially at low cost.

These and other objects are achieved with the reactor for endothermic reactions as claimed in the appended claims.

### Summary of the Invention

In the ensuing description, reference will be made to the specific case in which the reactor according to the invention is a reforming reactor for carrying out a process of reforming a gas flow comprising a methane-based feedstock and water vapor. However, one should understand that the reactor according to the invention finds application in several reactions of the endothermic type, including, among others, reactions of cracking a gas flow or gaseous mixtures of various kinds.

The reactor for reforming a flow of reaction gas containing methane and water vapor comprises a main body having corresponding inlets for a flow of heating gas coming from a combustion unit, such as, for example, a burner, and a flow of reaction gas comprising a methane-based feedstock and water vapor, respectively.

Preferably, the methane-based feedstock consists of natural gas (CH4) coming from a local distribution network or liquid methane (LNG) coming from a liquid methane production plant or from liquid methane storage tanks.

The steam is water vapor preferably coming from a water source, such as a plant for water treatment by osmosis, associated with a heat exchanger for heating up water and producing water vapor.

Preferably, the methane-based feedstock and the water vapor are introduced together into the reactor through the same inlet provided for the flow of reaction gas.

For ease of description, here below the gas flow consisting of the methane-based feedstock and water vapor will be referred to as flow of reaction gas.

Advantageously, the inlets provided for the flow of heating gas and the flow of reaction gas (Fr) are arranged in a counter-current manner. Preferably, the inlet for the heating gas is arranged at a first end of the body of the reactor, and the inlet for the flow of reaction gas is arranged at a second end, opposite to the first end, of the reactor.

The flow of heating gas has a high temperature, preferably between 900°C and 950°C, more preferably of about 910°C, in order to supply the calories required for activating the reforming reaction in the reactor.

The reactor comprises at least one catalyst and is capable of generating a flow of syngas by absorbing heat from the flow of heating gas. Preferably, the catalyst is arranged near the first end of the body of the reactor.

The reactor is provided with corresponding outlets for the flow of heating gas and for the synthesis gas obtained from the reforming reaction, respectively. The synthesis gas, known as syngas, is a mixture essentially consisting of carbon monoxide and hydrogen.

Preferably, the outlet for the syngas is arranged at the first end of the body of the reactor, whereas the outlet for the flow of heating gas is arranged at the second end of the body of the reactor.

Advantageously, according to the invention, the reactor comprises heat storage means made of a ceramic material and capable of absorbing and storing heat from the flow of heating gas in order to supply the required calories for the flow of reaction gas to activate the reforming reaction in said reactor.

The reforming reaction is a strongly endothermic reaction requiring high temperatures. Thanks to the fact that the reactor comprises heat storage means made of a ceramic material, it is possible to absorb heat from the flow of heating gas in order to supply said heat to the reactor according to the requirements of the reaction. As a result, the heat storage means made of a ceramic material perform the function of a thermal flywheel. Thanks to the fact that the reforming reactor comprises heat storage means, the reactor is operative even after the flow of heating gas has been stopped for a time of up to 10 hours. Once a time of about 10 hours has elapsed, the reforming reactor will again have to be supplied with the flow of heating gas Fc, at least for a time of 5 minutes, in order to bring the reactor back to the temperature conditions necessary for the reforming reaction.

Preferably, the heat storage means are arranged near the second end of the body of the reactor.

Preferably, the heat storage means made of a ceramic material comprise ceramic masses with high thermal inertia in the form of bricks. More preferably, such bricks are micro-perforated in order to allow the passage of gases. According to the invention, preferably, the bricks have a parallelepiped shape, preferably with a rectangular base, having a width and a length of about 150 mm and height of about 300 mm. Each brick comprises about 2500 rectangular holes with width and length of about 2 mm. Preferably, the thickness of the walls between adjacent holes is about 1 mm.

Advantageously, according to the invention, the reactor comprises a reaction temperature control system including a plurality of temperature sensors associated with specific locations in the reactor, along a direction of travel of the flow of heating gas, in order to allow for a localized control of the reaction temperature inside the reactor, and a dedicated electronic control unit. The electronic control unit is programmed to compare the temperature values detected by said sensors and control the gas flows entering the reactor, i.e. the flow of heating gas and the flow of reaction gas, on the basis of the temperature values detected by said sensors.

Thanks to the fact that the reactor comprises a temperature control system, it is possible to control the reaction temperature at specific locations in the reactor and keep it within predetermined temperature ranges in order to prevent formation of carbon black or coke.

Preferably, the reaction temperature is controlled so as to keep it within a temperature range between 850°C and 890°C, and more preferably the reaction temperature will be kept around approximately 870°C.

Advantageously, the reactor according to the invention is configured to carry out at least two operating configurations: a first operating configuration, or heating configuration, in which the reactor receives the flow of heating gas and heats up by absorbing and storing the heat of the heating gas, and a second operating configuration, or reforming configuration, in which the flow of heating gas is preferably stopped and the reactor is fed, preferably in a counter-current manner, with the flow of reaction gas, i.e. with the flow of gas containing the methane-based feedstock and water vapor for starting the reforming reaction.

The reactor further comprises control means, such as, for example, valves, for regulating the gas flows entering and exiting the reactor.

The invention further relates to a method for producing a syngas by means of a reaction of reforming a flow of reaction gas comprising a methane-based feedstock and water vapor, said method comprising the steps of:
- introducing a flow of heating gas into a reactor as previously described for heating said reactor and supplying the calories required to activate the reforming reaction;
- introducing a flow of reaction gas comprising a methane-based feedstock and water vapor into the reforming reactor and causing a reforming reaction to obtain a syngas used for obtaining hydrogen.

Advantageously, according to the invention, there is provided a step of absorbing and storing the heat coming from the flow of heating gas as well as a step of controlling the temperature in the reactor in order to ensure an optimal temperature for the reforming reaction.

### Description of Some Preferred Embodiments

With reference to the annexed drawings, there is illustrated a preferred embodiment of the reactor according to the invention, which has been indicated as a whole with 10.

The reforming reactor comprises a main body 11 having corresponding inlets 13, 15 for a flow of heating gas Fc coming from a combustion unit (not shown), such as, for example, a burner, located outside the reactor 10, and for a flow of reaction gas Fr comprising a methane-based feedstock and water vapor, respectively;

In the illustrated embodiment, the body 11 of the reactor 10 has an elongated shape with vertical axis, for example a prism-like shape with a rectangular base.

In the illustrated embodiment, the flow of reaction gas comprises a methane-based feedstock, consisting of natural gas (LNG) coming from a local distribution network, or of liquid methane (CH4) coming from a liquid methane production plant or from liquid methane storage tanks.

In the illustrated embodiment, the steam is water vapor coming from a water source, such as a plant for water treatment by osmosis, associated with a heat exchanger for heating up water and producing water vapor.

In the illustrated embodiment, the water vapor and the methane-based feedstock, although coming from different sources, are introduced together into the reactor 10 through the same inlet 15 provided for the flow of reaction gas Fr. In other embodiments, separate inlets 10 will be provided for the methane-based feedstock and the water vapor.

Advantageously, according to the invention the inlets 13, 15 provided for the flow of heating gas Fc and the reaction flow Fr are arranged in a counter-current manner. In the illustrated embodiment, the inlet 13 for the flow of heating gas Fc is arranged at a first end, or upper end, 11a of the body 11 of the reactor 15, and the inlet 15 for the flow of reaction gas Fr is arranged at a second end 11b, opposite to the first end 11a, of the body 11 of the reactor 10.

The flow of heating gas Fr entering the reactor 10 has a high temperature, between 900°C and 950°C, preferably of about 910°C, in order to provide the heat required for activating the reforming reaction in the reactor 10. In addition, in the illustrated embodiment, the flow of reaction gas Fr passes through the reactor 10 from the first end 11a towards the second end 11b in an axial direction, i.e. from top to bottom of the reactor 10.

The reactor 10 comprises at least one catalyst 17 and is capable of generating a flow of syngas Fgs by absorbing heat from the flow of heating gas Fc. In the illustrated embodiment, the catalyst 17 is arranged near the first end 11a of the body 11 of the reactor 10. In addition, the catalyst 17 is preferably a catalyst based on metals, such as, for example, platinum and cesium.

The reactor 10 is further provided with corresponding inlets 19, 21 for the flow of heating gas Fc and for the synthesis gas Fgs obtained from the reforming reaction, respectively. The synthesis gas Fgs, known as syngas, is a mixture essentially consisting of carbon monoxide and hydrogen.

In the illustrated embodiment, the outlet 21 for the syngas Fgs is arranged at the first end 11a of the body 11 of the reactor 10, whereas the outlet 19 for the heating gas Fc is arranged at the second end 11b of the body 11 of the reactor 10. Therefore, the outlets 19, 21 are also arranged in counter-current manner.

Advantageously, according to the invention, the reactor 10 comprises heat storage means 23 made of a ceramic metal and capable of absorbing and storing heat from the flow of heating gas Fc in order to supply the calories required for the reforming reaction taking place in the reactor 10.

In the illustrated embodiment, the heat storage means 23 are arranged near the second end 11b of the body 11 of the reactor 10. Thanks to this configuration, the flow of heating gas Fc upon entering the reactor 10 encounters first the catalyst 17, which heats it up by yielding heat, passes thereafter through the heat storage means 23 and heats them up, and finally exits through the corresponding outlet 19 provided at the bottom of the reactor 10.

In the illustrated embodiment, the heat storage means 23 made of a ceramic material comprise ceramic masses with high thermal inertia made in the form of bricks. In addition, the bricks are micro-perforated to allow the passage of gases.

In the illustrated embodiment, the bricks have a parallelepiped shape, with a preferably rectangular base with width and length of about 150 mm and with height of about 300 mm. Each brick comprises at least 2500 holes having a rectangular shape with width and length of about 2 mm. Preferably, the thickness of the walls between adjacent walls is about 1 mm.

Advantageously, according to the invention, the reactor 10 comprises a reaction temperature control system comprising a plurality of temperature sensors associated with specific locations in the reactor 10, along a direction of travel of the flow of heating gas Fc, in order to allow for a localized control of the reaction temperature inside the reactor 10, and a programmable electronic control unit. The electronic control unit is programmed to compare the temperature values detected by said sensors and control the gas flows entering the reactor 10, i.e. the flow of heating gas Fc and the flow of reaction gas Fr, in accordance with the temperature values detected by said sensors.

Thanks to the fact that the reactor comprises a temperature control system, it is possible to control the reaction temperature at specific locations in the reactor 10 and keep it within predetermined temperature ranges in order to prevent formation of carbon black or coke.

According to the invention, the reaction temperature is controlled so as to keep it within the temperature range between 850°C and 890°C, and more preferably the reaction temperature will be kept at about 870°C.

In the illustrated embodiment, the temperature control system comprises at least three temperature sensors: a first sensor arranged near the first end 11a of the body 11 of the reactor 10 in order to detect the temperature of the flow of heating gas Fc entering the reactor 10, which temperature must be about 910°C; a second temperature sensor arranged at approximately two thirds of the heat storage means 23, where the temperature must be about 850°C, and a third sensor arranged near the second end 11b of the body 11 of the reactor 10 in order to detect the temperature at the bottom of the reactor 10, which must be about 150°C. When the values detected by the sensors coincide with the temperatures required by the reforming reaction, this means that the reactor 10 has completed its heating step and is ready to carry out the reforming reaction. For this purpose, the flow of heating gas Fc is stopped and the reactor 10 is fed, in a counter-current manner, with the flow of reaction gas Fr.

Advantageously, accordingly, the reactor 10 according to the invention is configured to carry out at least two operating configurations: a first operating configuration, or heating configuration, in which the reactor 10 receives the flow of heating gas Fc and heats up by absorbing and storing the heat from the flow of heating gas Fc, and a second operating configuration, or reforming configuration, in which the flow of heating gas Fc is stopped and the reactor 10 is fed, preferably in a counter-current manner, with the flow of reaction gas Fr, i.e. with the flow of gas comprising the methane-based feedstock and water vapor for carrying out the reforming reaction.

The reactor 10 further comprises control means, such as, for example, valves, 25, 27, 29, 31 for regulating the gas flows Fc, Fr entering and the gas flows Fc, Fgs exiting the reactor 10. In the illustrated embodiments, four valves are provided, namely two at the first end 11a and two at the second end 11b of the body 11 of the reactor 10.

The operation of the reactor 10 and the method for producing a syngas Fgs by means of a reaction of reforming a flow of methane-based reaction gas Fr and water vapor will be described here below.

This method provides for arranging a reactor 10 as previously described and introducing a flow of heating gas Fc into the reactor 10 in order to heat up the reactor 10 and supply the calories required for activating the reforming reaction. The flow of heating gas Fc enters the reactor 10 at a temperature of about 910°C and passes through the reactor 10 from the first end 11a to the second end 11b, heating first the catalyst 17 and then the ceramic masses 23. Once the temperature control system of the reactor 10 ascertains that the temperature detected by a plurality of sensors coincide with those required for the reaction, the flow of heating gas Fc is stopped. At this stage, a flow of reaction gas Fr comprising a methane-based feedstock and water vapor into the reforming reactor 10 and a reforming reaction is caused in order to obtain a flow of syngas. The flow of reaction gas Fr is fed in a counter-current manner from the bottom of the reactor 10, whereby, upon entering the reactor 10, it will encounter the ceramic masses 23 in the form of bricks, which will yield the stored heat in order to activate the reforming reaction on the catalyst 17. During the reforming reaction, the temperature inside the reactor 10 will decrease and the syngas Fgs obtained from the reforming reaction will be used in reactions for obtaining hydrogen, such as, for, example, shift reactions.

At this stage, the flow of reaction gas Fr is stopped and the reactor 10 is fed again with the flow of heating gas Fc in order to heat it up for making it available for another reforming reaction.

The invention as described and illustrated is susceptible to several variations and modifications, falling within the same inventive principle.

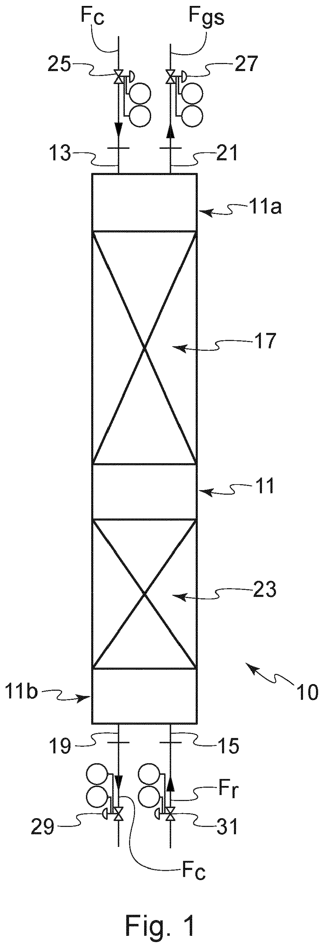

## Claims

1. A reactor (10) for endothermic reactions on a catalyst, said reactor comprising:
- a main body (11) having corresponding inlets (13, 15) for a flow of heating gas (Fc) and a flow of reaction gas (Fr), respectively;
- a catalyst (17) for reacting said flow of reaction gas (Fr) in order to obtain a flow of syngas (Fgs) exiting said reactor (10);
**characterized in that** it comprises heat storage means (23) made of a ceramic material and capable of absorbing and storing heat from the flow of heating gas (Fc), in order to supply calories for the endothermic reaction taking place in said reactor (10).

2. The reactor (10) according to claim 1, wherein said heat storage means (23) comprise ceramic masses in the form of bricks and are micro-perforated to allow the passage of gases.

3. The reactor (10) according to claim 2, wherein said ceramic masses have a parallelepiped shape and comprise holes having a rectangular shape.

4. The reactor (10) according to any of the preceding claims, wherein said inlets (13, 15) for the flow of heating gas (Fc) and the flow of reaction gas (Fr) are arranged in counter-current a first end (11a) and at a second end (11b) of the body (11) of the reactor (10), respectively.

5. The reactor (10) according to any of the preceding claims, wherein said body (11) is further provided with outlets (19, 21) for the flow of heating gas (Fc) and for the flow of syngas (Fgs), respectively.

6. The reactor (10) according to any of the preceding claims, comprising a reaction temperature control system comprising in turn a plurality of temperature sensors, positioned at specific locations in the reactor along a direction of travel of the flow of heating gas (Fc) for allowing localized control of the reaction temperature, and an electronic control unit for controlling the gas flows (Fc, Fr) entering the reactor (10) in accordance with the temperature values detected by said sensors.

7. The reactor (10) according to any of the preceding claims, comprising control means associated with the inlets (13,15) and the outlets (19,21) to regulate the gas flows (Fc, Fr) entering the reactor (10) and the gas flows (Fc, Fgs) exiting the reactor (10).

8. The reactor (10) according to any of the preceding claims, wherein the catalyst (17) is a catalyst containing platinum and cesium and is positioned at the first end (11a) of the body (11) of the reactor (10).

9. The reactor (10) according to any of the preceding claims, wherein the heat storage means (23) made of a ceramic material are positioned at the second end (11b) of the body (11) of the reactor (10).

10. Method for producing a syngas (Fgs) through an endothermic reaction of a flow of reaction gas (Fr), said method comprising the steps of:
- providing a reactor (10) as claimed in claims 1-9;
- introducing a flow of heating gas (Fc) into the reactor (10) for heating up said reactor (10) and supplying the calories required to activate the endothermic reaction in said reactor (10);
- introducing a flow of reaction gas (Fr) into the reactor (10) and causing an endothermic reaction in order to obtain a syngas (Fgs),
**characterized in that** it comprises a step of absorbing and storing the heat coming from the flow of heating gas (Fc) and a step of controlling the temperature in the reactor (10) in order to ensure an optimal temperature for the endothermic reaction.
